# EUROPEAN PATENT APPLICATION

(11) **EP 4 822 601 A1**
(43) Date of publication of application: **14.10.2026**
(21) Application number: 26167519.3
(22) Date of filing: 25.03.2026
(51) Int. Cl.: G06N 3/06, G06N 3/0475, G06N 3/0455, G06N 3/0442, G06N 3/096

(54) **FINE GRAIN POST-TRAINING QUANTIZATION FOR MIXED-PRECISION ARTIFICIAL INTELLIGENCE HARDWARE ACCELERATION**

(30) Priority: 11.04.2025 US 202519176562
(71) Applicant: Microsoft Technology Licensing, LLC, Redmond, WA 98052 (US)
(72) Inventor: MAJI, PARTHA PRASUN, Redmond, 98052 (US); KOLHE, GAURAV SADANAND, Redmond, 98052 (US); ELANGO, VENMUGIL, Redmond, 98052 (US); SADIQ, SULAIMAN, Redmond, 98052 (US)
(74) Representative: CMS Cameron McKenna Nabarro Olswang LLP

(57) **Abstract**

A method for recommending a mixed-precision data type configuration to accelerate execution of a language model includes identifying a plurality of mixed-precision test configurations that assign mixed-precision data types among components of the language model; measuring saliency metrics for the language model while the language model is executed in a test environment configured in accord with multiple of the plurality of mixed-precision test configurations; generating a saliency ranking that ranks the components based on the saliency metrics; and generating the recommended mixed-precision data type configuration. The recommended mixed-precision data type configuration assigns a first, reduced-precision data type to a least salient subset of the components identified in the saliency ranking while assigning a second, higher-precision data type to a most salient subset of the components identified in the saliency ranking.

## Description

### Background

A typical language model has many decoders, ranging from tens to hundreds. Each decoder performs various mathematical operations, such as matrix multiplications, bias additions, non-linearity operations, layer normalizations, and token prediction operations (SoftMax). The majority of the compute and memory usage in a language model is attributable to the matrix multiplication operations within each decoding layer.

Language models can use different numeric precisions, such as floating-point (e.g., FP32, FP16, BF16) or integer (e.g., INT8, INT16). The choice of data type affects memory usage, computational throughput, and model accuracy. Conventional language models use a uniform data type for all matrix multiplication weights and for the activations that are passed between decoding layers. This data type is typically used to train the model and then fixed thereafter by configuring each AI accelerator implementing an instance of the model to use the same data type(s) as used during the training.

However, with recent advances in AI accelerator technology, it is common for modern hardware accelerators to be capable of supporting one or more data types that are of lower precision than those used during model training. If these lower-precision data types could be leveraged to store attention weights or activations of the trained model, computational overhead and memory consumption could be significantly reduced as compared to the computational overhead and memory consumption associated with conventional language model implementations. However, it is typically not possible to reduce the precision of stored attention weights without also reducing model accuracy by an unacceptable amount.

### Summary

According to one implementation, a post-training quantization method for mixed-precision artificial intelligence (AI) hardware acceleration includes identifying a plurality of mixed-precision test configurations that assign mixed-precision data types among components of the language model used in matrix multiplication operations. The plurality of mixed-precision test configurations each assigns a reduced-precision data type to a select different one of the components while assigning a comparatively increased-precision data type to other of the components. The method further includes measuring saliency metrics for the language model while the language model is executed in an environment that simulates behavior of an artificial intelligence (AI) hardware accelerator according to multiple of the plurality of mixed-precision test configurations. The method further provides for generating a saliency ranking based on the saliency metrics. The saliency ranking ranks at least a subset of the components according to relative salience. The method further includes using the saliency ranking to recommend a mixed-precision data type configuration for the AI hardware accelerator to implement while executing the language model. The recommended mixed-precision data type configuration assigns a first data type to a most salient subset of the components identified in the saliency ranking and a second data type to a least salient subset of the components identified in the saliency ranking, with the second data type being of reduced-precision as compared to the first data type.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Other implementations are also described and recited herein.

### Brief Description of the Drawings

FIG. 1 illustrates an example system for systematically identifying a mixed-precision data type configuration for accelerating the execution of a language model without reducing model accuracy
FIG. 2 illustrates examples of mixed-precision data type configurations that may be recommended in systems implementing aspects of the herein-disclosed technology.
FIG. 3 illustrates still another example of a mixed-precision data type configuration that may be recommended within a system implementing aspects of the herein-disclosed technology.
FIG. 4 illustrates another example system for systematically identifying mixed-precision data configurations for accelerating the execution of a language model without reducing model accuracy.
FIG. 5 illustrates example methodologies for identifying an optimal mixed-precision data type configuration for an AI hardware accelerator implementing a language model.
FIG. 6 illustrates example operations for ranking different language model components in terms of relative saliency and using the ranking to generate a recommended a mixed-precision data type configuration.
FIG. 7 illustrates example operations for identifying a mixed-precision data type configuration usable to accelerate execution of a language model while retaining a target degree of accuracy for the language model.
FIG. 8 illustrates an example AI hardware accelerator 800 that may be selectively configured to execute a language model in accordance with the described technology.
FIG. 9 illustrates an example computing device for use in implementing aspects of the described technology.

### Detailed Description

To reduce computational overhead and memory consumption associated with executing a language model, it is desirable to perform the matrix multiplication computations of the model using the lowest-precision data types supported by the select hardware environment (e.g., the AI accelerator) without reducing model accuracy below a target threshold. Presently, there are two approaches to lowering the precision of language models. Mixed Precision Training (MPT) involves training models using a mix of data types, though typically the same data type across all matrix multiplications. It is challenging to achieve the same level of accuracy with MPT as compared to training with higher precision. Thus, although this approach leads to a savings in resource utilization, the resulting model accuracy is typically worse than the accuracy that is achieved with higher-precision training (and higher resource consumption).

The second approach to reducing language model precision is known as Post Training Quantization (PTQ). This reduces the data type of pre-trained models even further, allowing for ongoing improvements. Present approaches to PTQ convert model weights from floating-point precision to lower bit-widths in a uniform manner such that an identical reduction in precision is applied to all weights. Like MPT, this approach tends to reduce model accuracy as compared to that achieved with high-precision training and (matching) high-precision implementation.

The herein-disclosed technology sets forth a new post-training quantization technique that supports the use of mixed-precision data types within various components of a language model that support matrix multiplication operations. For example, the herein-disclosed technology can, when deployed, provide for using different data types to store the attention weights in different decoder layers, different data types to store the weights within different channels (columns) or rows of an attention matrix within a single decoder, and/or different data types to store the activations that are passed between different decoding layers.

The herein-disclosed mixed-precision approach is implemented, in part, by executing various operations to test the salience (e.g., sensitivity) of different components of a pre-trained language model. As used herein, the term salience refers to the degree to which a model component influences or contributes to the output of the model. Salience of a model component can be measured by changing the precision (by altering the data type) of the model component and measuring a corresponding impact on the model - either by directly measuring a change in model accuracy that occurs when the precision of the component is reduced or, instead, by measuring intermittent noise introduced into matrix multiplication operations, such as by measuring vector shifts that occur when the precision of attention weights is reduced from a higher-precision data type (e.g., FP8) to a lower-precision data type (e.g., FP6 or FP4).

According to one implementation, the disclosed approach provides for determining a variety of mixed-precision test configurations supported by an AI hardware accelerator that are usable to respectively measure the salience of different components of a language model implemented by the AI hardware accelerator. Each mixed-precision test configuration assigns a mix of data types among model components used to support matrix multiplication computations. For example, two or more different data types are assigned among different decoders of the model and/or sub-decoder components (computation blocks or columns or rows within an individual weight matrix). In one implementation, each of the mixed-precision test configurations assigns a reduced-precision data type to a select (single) model component, such as a single decoder or a single decoder channel, while assigning a comparatively increased-precision data type to other model components, such as to all other components used to support matrix multiplication operations. This type of configuration makes it possible to test the salience of the select model component assigned to store the reduced-precision data type.

During salience testing, the AI hardware accelerator is iteratively re-configured to implement instances of the language model in accordance with each of the different mixed-precision text configurations and to measure one or more saliency metrics for each different configuration. Measuring the saliency metric may, in some implementations, entail measuring a drop in model accuracy that is observed when executing the model according to a select mixed-precision test configuration as compared to a baseline test configuration - e.g., a configuration in which all model decoders use a uniform data type (generally, the higher-precision data type) for attention weights and activation. The results of this saliency testing are used to rank the different model components in terms of their relative saliency. Within this saliency ranking, a first model component is ranked as more salient than a second model component when a reduction in the precision of the first model component (e.g., from the high-precision data type to the low-precision data type) has a larger impact on the model's matrix computations than an identical reduction in the precision of the second model component.

Based on the saliency ranking determined per the above-described saliency testing operations, a mixed-precision configuration is then recommended for implementation. Various techniques may, in different implementations, be used to select this recommended mixed-precision configuration. However, the recommended mixed-precision configuration is - by design - a configuration that uses an increased-precision data type for a subset of the most salient (sensitive) components that are used in matrix multiplication operations while using a comparatively reduced-precision data types for a subset of the least salient components that are used in the matrix multiplication operations. Per this mixed-precision approach, it is possible to significantly reduce the computational overhead incurred during model execution while retaining the same model accuracy as that realized when implementing the model using a uniform-precision data type across all attention weights and activations (e.g., the uniform precision data type that was used during training of the model).

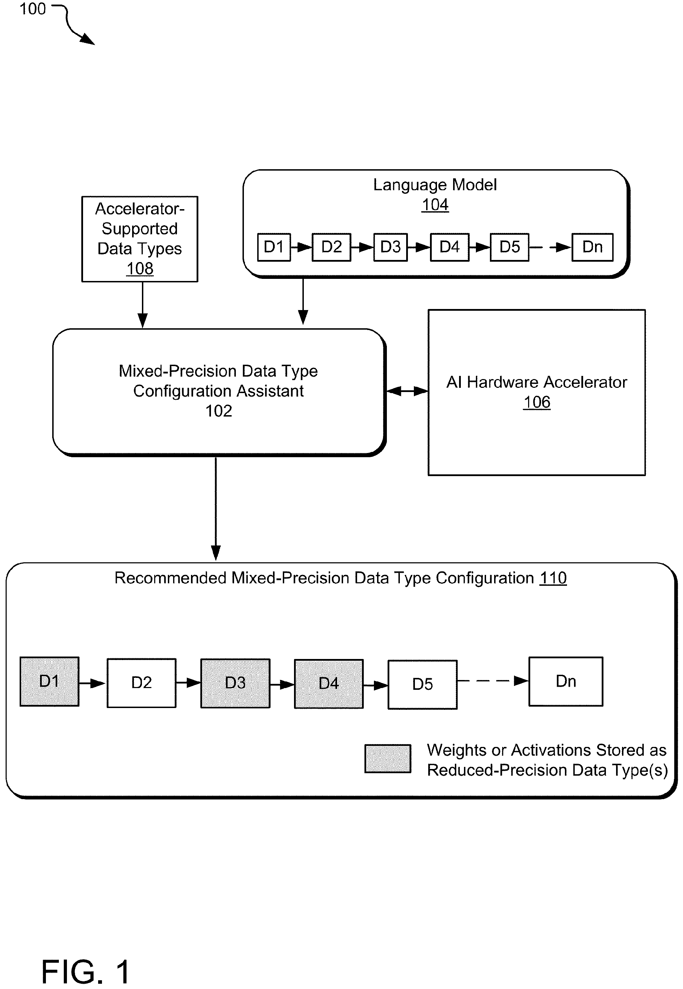

FIG. 1 illustrates an example system 100 for systematically identifying a mixed-precision data type configuration that reduces the computational of a language model without reducing model accuracy. The system 100 includes a mixed-precision data type configuration assistant 102 that accepts as input a language model 104 and an identification of data types supported by an AI hardware accelerator 106 that is being configured to implement an instance of the language model 104. The data types supported by the AI hardware accelerator 106 are shown in FIG. 1 as "accelerator-supported data types 108," which may be understood as including at least a collection of data types supported by the components of the AI hardware accelerator 106 tasked with carrying out matrix multiplication operations. Typically, matrix multiplication operations are executed by a dedicated processing engine optimized specifically for tensor operations, such as a Tensor Core processing engine, MatMul processing engine, or similar processing engine integrated into the core processing units of the AI hardware accelerator 106. Thus, the accelerator-supported data types 108 identify at least a subset of data types (numeric precisions) that are supported by this dedicated processing engine.

Examples of possible supported data types include floating-point data types and fixed-point data types. Floating-point data types are designed to represent real numbers with a mantissa (significant digits) and an exponent, allowing for a wide dynamic range (i.e., very large or very small numbers). The precision of these numbers can be adjusted, but floating-point formats are typically more computationally expensive and require more memory than fixed-point formats. Examples of floating-point data types - in order of highest to lowest precision- include FP32 (32-bit floating point), FP16 (16-bit floating point), FP8(8-bit floating point), and FP4(4-bit floating point).

In contrast to floating-point data types, fixed-point data types have a fixed number of bits for representing numbers, often with no exponent. They represent values in a scaled integer form, where part of the bits are used for the integer portion, and the rest of the bits represent the fractional portion (if any). Fixed-point data types represent numbers with lower precision than floating-point types but much more efficiently in terms of memory and computation. Examples of fixed-point data types common in machine learning model implementations split the allocation of bits between weights (denoted by "w" in the data type identifier) and activations (denoted by the "a" in the data type identifier). For example, w4a6 is a fixed-point data type that uses 4 bits for weights and 6 bits for activations, while w6a8 is another fixed-point data type that uses six bits for weights and six bits for activations. Other fixed-point data types include w16a16, w8a8, and w6a8. Among fixed-point data types, precision is determined primarily by the number of bits allocated to the weights and secondarily (e.g., when there is a tie between bits allocated to the weights) by the number of bits allocated to the activations. For example, w8a6 is a higher-precision data type than w6a6, while w8a8 is a higher-precision data type than w8a6. Still other examples of possible data types included in the accelerator-supported data types 108 include BFloat data types (e.g., BF16, BF8, BF6, BF4), which are similar to floating-point data types but differ in that they allocate different numbers of bits to the exponent and mantissa portions of the stored value. Since a floating-point data type allocates more bits to the mantissa than a Bfloat data type, the floating-point data type is more precise (e.g., FP16 is a higher-precision data type than PF16).

In various implementations, the accelerator-supported data types 108 are passed to the mixed-precision data type configuration assistant 102 in different ways. In one implementation, the mixed-precision data type configuration assistant 102 receives, as input, a specification for the AI hardware accelerator 106 that identifies the data types, which are, in turn, extracted by a language model (e.g., different than the language model 104). For example, the mixed-precision data type configuration assistant 102 includes or communicates with a language model that extracts the data types that are supported by the processing units of the AI hardware accelerator 106.

In addition to receiving the accelerator-supported data types 108 as input, the mixed-precision data type configuration assistant 102 also receives the language model 104, which is to be understood as a model that is trained to analyze textual inputs, such as a natural language processing (NLP) model or a multimodal model that can receive prompts that include various types of input (e.g., text, image, audio, and/or video data) and likewise generate outputs of multiple types that are not necessarily the same as the input type. Examples of language models include transformer-based models such as generative pre-trained transformer (GPT) models, Open Pretrained Transformer (OPT) models, and Bidirectional Encoder Representations from Transformers (BERT) models, as well as Bioscience Large Open-science Open-access Multilingual (BLOOM) models, seq2seq models, long short-term memory (LSTM) network, and recurrent neural networks (RNNs). Examples of publicly available multimodal language models include the Mistral AI model and the large language model Meta AI (LLaMa) model.

Different language models have different architectures comprising different components. Commonly, a language model includes a number of decoder layers. Some language models include encoder layers in addition to or in lieu of decoder layers. In a decoder-only transformer model such as a generative pre-trained transformer (GPT) model, each decoder layer includes one or more self-attention blocks, which may include either a single attention head or multiple attention heads. Within each attention block, attention is computed based on three weight matrices learned during the training of the model - specifically, the key weight matrix (Wk), the value weight matrix (Wv), and the query matrix (Wq). Each decoding layer also typically includes a multilayer perceptron (MLP) block, which includes two linear layers with an activation layer in between. Outputs of the MLP block are referred to as activations.

The mixed-precision data type configuration assistant 102 uses the layout of components within the language model 104 in combination with the accelerator-supported data types 108 to determine a plurality of mixed-precision configurations that can be implemented by the language model and used to test the salience of different individual components within the language model - specifically, components that are used to support matrix multiplication operations. Examples of these components include model decoders (e.g., D1-Dn in FIG. 1), weight matrices stored by the decoders, individual channels (e.g., columns) in the weight matrices, rows of the weight matrices, and the activations that are passed between decoding layers. Each mixed-precision configuration identified by the mixed-precision data type assistant consists of data types that are supported by the AI hardware accelerator 106.

As used herein, the term "mixed-precision configuration" refers to a data type configuration for a language model that uses two or more data types of variable degrees of precision among the collection of language model components supporting matrix multiplication operations. Because the identified mixed-precision configurations are used in saliency testing, the term "mixed-precision configuration" is used interchangeably with the terms "mixed-precision test configuration" and "test configuration" below.

In one implementation, the mixed-precision test configurations identified by the mixed-precision data type configuration assistant 102 are configurations that each assign a reduced-precision data type to a select one of the model components while assigning a comparatively increased-precision data type to other model components. During saliency testing on a single model component, some of the test configurations may employ different pairs of the reduced-precision and increased-precision data types. For example, a first test configuration may use FP8 and FP6, while another test configuration may use FP8 and FP4. Some implementations may provide for saliency testing of three or more different types.

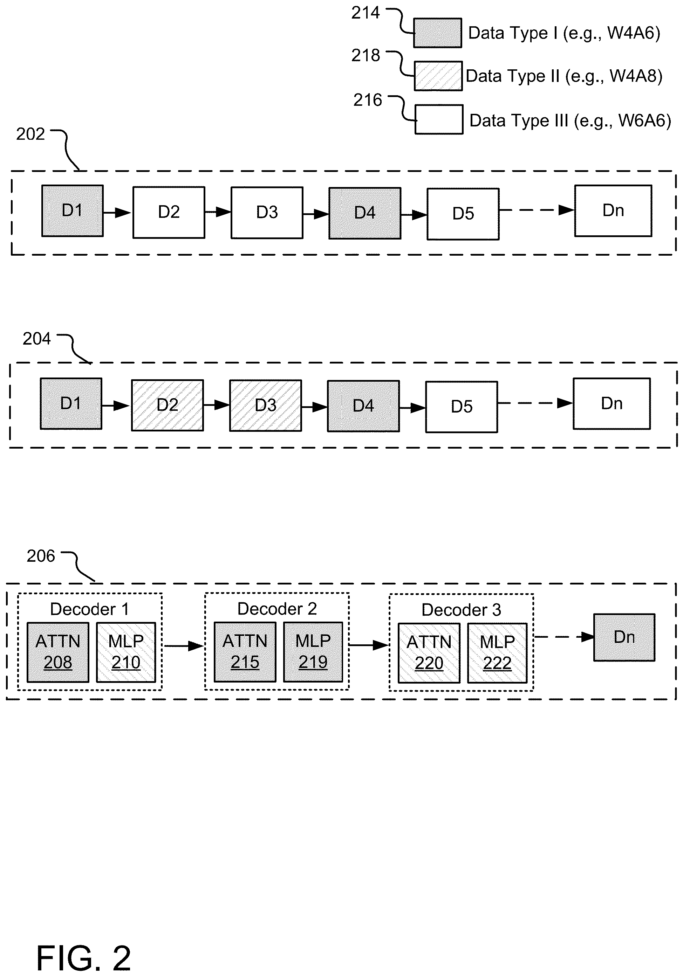

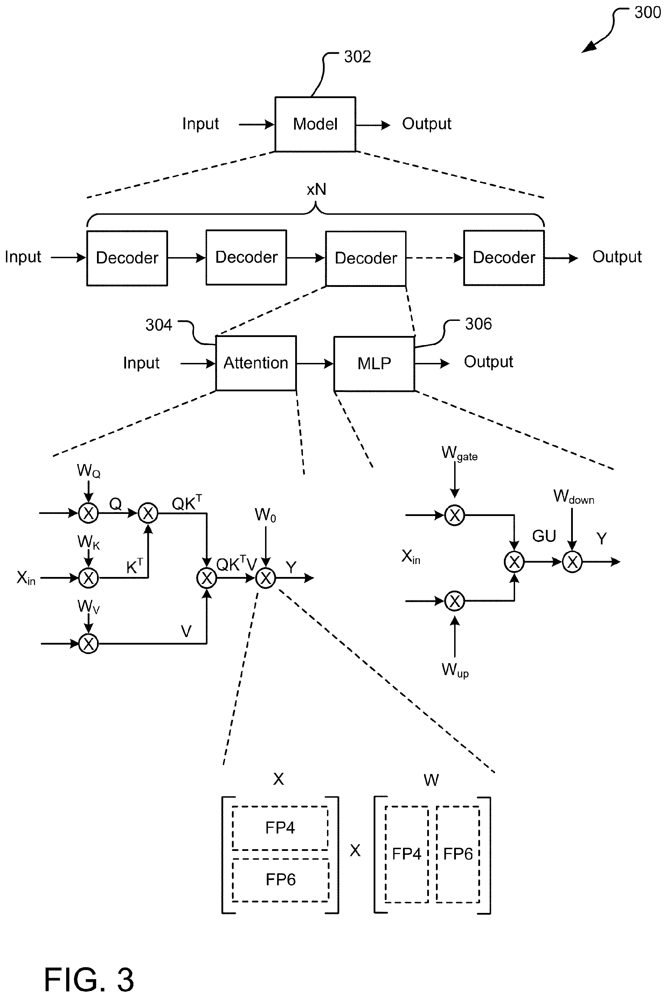

As used herein, pairs of relative terms quantifying precision (e.g., increased-precision and reduced-precision or high-precision and lower-precision) are intended to impart relative meaning on one another but not intended to impose restrictions on the individual types of values each term refers to. That is, when both are used within the same individual mixed-precision configuration employed to test salience of an individual model component, the "increased-precision" data type is a data type of higher precision that the "reduced-precision data type." However, a reduced-precision data type of one implementation may also be an increased-precision data type in another implementation. For example, FP6 may be an increased-precision data type when included in a mixed-precision configuration that also includes the FP4 data type. Conversely, FP6 may be considered a reduced-precision data type when included in a mixed-precision configuration that also includes the FP8 data type. Several examples of mixed-precision test configurations are discussed with respect to FIG. 2 and 3.

After identifying the plurality of mixed-precision configurations supported by the AI hardware accelerator 106 that can be implemented by the language model 104, the mixed-precision data type configuration assistant 102 uses the plurality of mixed-precision configurations to orchestrate a series of saliency test operations. The test operations are performed within a test environment which may reside on either the AI hardware accelerator 106 or a software system that emulates the AI hardware accelerator 106, referred to herein as an "accelerator emulator." For example, an accelerator emulator may run on generic hardware and simulate the data types stored by the different components of the language model, which allows behavior of the model to be studied with respect to such configurations as generally described below.

. During the saliency test operations, the language model 104 is loaded into a memory of the test environment that is iteratively reconfigured to execute the language model 104 according to the different mixed-precision configurations (the "test configurations"). Within each of the test configurations, one or more saliency metrics 427 is measured.

As used herein, the term "saliency metric" refers to a metric that quantifies a degree by which the precision of an individual model component impacts the performance (e.g., noise and accuracy) of the model. In one implementation, a saliency metric is measured by determining the degree of noise introduced into the language model 104 when the precision of a select model component is reduced. For example, this noise can be measured by measuring a spatial shift that occurs in a select vector or weight matrix when the precision of that vector or matrix is reduced (e.g., from storing higher-precision data to lower-precision data). In this case, the "noise" measurement is the saliency metric, and it is possible to measure the saliency metric without inputting test data to the language model 104.

In another implementation, measuring the saliency metric entails measuring a reduction in the accuracy of the language model, which results when the precision of a select model component is reduced. For example, the language model 104 is instructed to perform a particular type while configured according to the baseline configuration (e.g., a configuration recommended by the model provider that uses a uniform data type) and is instructed to perform the same task while configured according to a select one of the mixed-precision test configurations (e.g., that reduces the precision of at least one component as compared to the baseline configuration. The processing task may, for example, be a coding task, a text prediction task, a math task, or a Q&A task.

Based on the saliency metrics computed in association with the different mixed-precision configurations, the mixed-precision data type configuration assistant 102 ranks the model components subjected to the testing in order of saliency (sensitivity). If, for example, a greater drop in model accuracy is observed by reducing the precision of the second decoder (D2) as compared to other decoders, the second decoder is identified in the ranking as having higher salience than the other decoders. Using this saliency ranking, the mixed-precision data type configuration assistant 102 identifies and outputs a recommended mixed-precision data type configuration 110 for deployment of the language model 104.

The recommended mixed-precision data type configuration 110 is a data type configuration that reduces the precision of one or more model components as compared to a configuration that uses a singular data type recommended by the model provider for the attention weights and activations of the model (referred to herein as a nominal baseline configuration). Additionally, the recommended mixed-precision data type configuration 110 can be implemented without reducing model accuracy more than a predefined target threshold. In some cases, the recommended mixed-precision data type configuration 110 can be implemented without causing any decrease in model accuracy. The recommended mixed-precision data type configuration 110 reduces the computational overhead of the language model 104 during nominal processing operations as compared to the baseline configuration.

In the example of FIG. 1, the saliency metrics indicate that decoders D2, D5, and Dn are more salient (sensitive to data type precision changes) than D1, D3, and D4. Consequently, the recommended mixed-precision data type configuration 110 assigns a higher-precision data type to D2, D5, and Dn and a comparatively reduced-precision data type to D1, D3, and D4.

FIG. 2 illustrates examples 202, 204, and 205 of mixed-precision data type configurations that may, in some implementations, be implemented to reduce computational overhead during model execution without impacting model performance. The first example 202 illustrates a mixed-precision data type configuration similar to the example shown in FIG. 1, which assigns two data types - namely, an high-precision data type 216 (e.g., W6A6) and a low-precision data type 214 (e.g., W4A6) - among different decoder of a language model. In this example, D1 and D4 are identified as being less salient (sensitive to precision changes) than D2, D3, D5, and Dn, and are therefore assigned to store values of the low-precision data type 214, whereas D2, D3, D5, and Dn are identified as being more salient and are therefore assigned to store values of the high-precision data type 216.

The second example 204 illustrates a mixed-precision data type configuration that implements the same two data types as in the first example 202 and additionally implements a mid-precision data type 218 (e.g., W4A8), which has higher precision than the low-precision data type 214 (e.g., W4A6) and lower than the high-precision data type 216 (e.g., W6A6). In this example, decoders D2 and D3 are assigned to store values of the mid-precision data type 218 because these decoders are determined to have a salience that is less than that of decoders D5 and Dn but greater than that of D1 and D4.

In the final example 206 of FIG. 2, the mixed-precision data type configuration is based on salience testing of decoder sub-components rather than entire decoders. In this example, salience is assessed independently for different sub-decoder components - specifically, salience is assessed for the attention blocks and multi-layer perceptron (MLP) blocks within each decoder. Here, an attention block 208 in decoder 1 is determined to be among the least salient of the components assessed (e.g., among the top 10% of the least salient components) while the MLP block 210 in the same decoder is determined to have a considerably higher degree of salience. Consequently, the low-precision data type 214 is assigned to the attention block 208, while the mid-precision data type 218 is assigned to the MLP block 210. Within the decoder (Decoder 2), the low-precision data type 214 is assigned to both attention block 215 and MLP block 219, while the mid-precision data type 218 is assigned to both attention block 220 and MLP block 222 of the third decoder (Decoder 3).

FIG. 3 illustrates still another example 300 of a mixed-precision data type configuration that may be identified as usable to reduce the computational overhead of a language model in some implementations of the herein-disclosed technology. In this example, a language model 302 comprises N-number of decoder layers. Each of the N-number of decoder layers includes an attention block (e.g., attention block 304) and a multi-layer perceptron block (MLP block 306). Matrix multiplication operations are performed in both the attention block 304 and the MLP block 306 using various weight matrices (e.g., W_{q}, Wₖ, Wᵥ, Wₒ, W_{gate}, Wᵤₚ, W_{down}), each of which is to be understood as consisting of individual columns (channels) and rows.
In the illustrated implementation, the individual columns and rows in the different weight matrices store different data types.

During saliency testing, mixed-precision test configurations are identified to test the salience of different individual rows and/or columns in the different weight matrices of the different decoders. Based on saliency metrics measured during the salience testing, these sub-decoder elements (e.g., the individual rows and/or columns) are ranked based on their corresponding relative degree of salience (sensitivity to data type precision changes). Higher-precision data type(s) are assigned to an identified subset of the most salient of these sub-decoder elements, while a comparatively reduced-precision data type is assigned to an identified subset of the least salient of these sub-decoder elements. Due to the different data types in different columns and rows of different weight matrices, the activations passed between different pairs of the N decoders may have different data types as well.

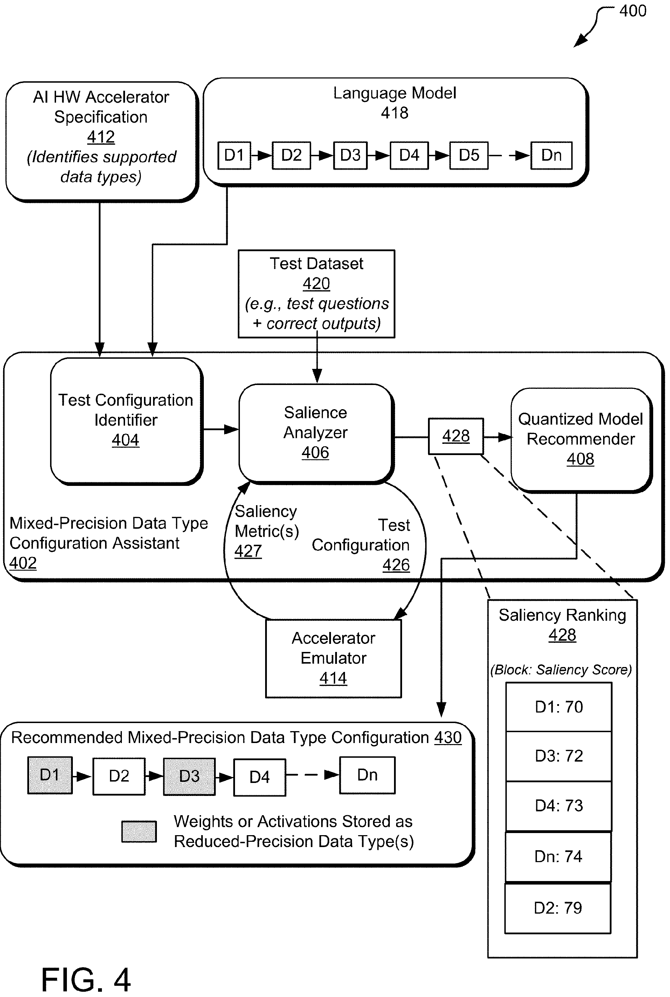

FIG. 4 illustrates another example system 400 for systematically identifying mixed-precision configurations of a language model that reduce computational overhead without reducing model accuracy. The system 400 includes many of the same components as those described with respect to FIG. 1; however, some further example detail is provided below concerning details of saliency testing.

The system 400 includes a mixed-precision data type configuration assistant 402 that includes three sub-components, including a test configuration identifier 404, a salience analyzer 406, and a quantized model recommender 408, each of which may be understood as comprising software or primarily software.

The test configuration identifier 404 receives, as input, an AI hardware accelerator specification 412 that provides specification details for an AI hardware accelerator (not shown). The AI hardware accelerator is a device designed to accelerate artificial intelligence (AI) tasks such as deep learning, machine learning, and data processing, particularly in the training and inference phases of AI modeling. In various implementations, the AI hardware accelerator includes one or more graphics processing units (GPUs), Tensor Processing Units (TPUs), Field Programmable Gate Arrays (FPGAs), application-specific integrated circuits (ASICs), neuromorphic chips, digital signal processors (DSPs), quantum processors, Al-optimized central processing units (CPUs), or in-memory computing chips. The AI hardware accelerator specification 412 is a text document describing the detailed technical parameters, features, and performance characteristics of AI hardware accelerator. This document identifies specific data types that are supported by the dedicated processing engine within the AI hardware accelerator that performs matrix multiplication operations. The test configuration identifier 404 includes, or communicates with, a trained language model to identify and extract, from the AI hardware accelerator specification 412, the specific supported data types.

The test configuration identifier 404 also receives, as input, a language model 418 that is to be executed on the AI hardware accelerator. The test configuration identifier 404 reads configuration data for the language model 418 to determine its respective architecture (e.g., the number of decoders and sub-layers within each decoding layer, such as number of attention blocks). Then, using the identified architecture of the language model 418 in combination with the supported data types extracted from the AI hardware accelerator specification 412, the test configuration identifier 404 identifies a plurality of mixed-precision test configurations that can be implemented by the language model 418 and used to test saliency of different individual components within the language model - specifically, components that are used to support matrix multiplication operations.

Each mixed-precision test configuration assigns two or more data types among respective components of the language model 418 that perform matrix multiplication operations during nominal data processing of the model (e.g., decoding layers, sub-decoder compute blocks such as attention blocks, individual weight matrices, channels or rows within compute blocks or matrices, or MLP blocks that generate activations). For example, a first mixed-precision test configuration (test configuration 426) assigns a first data type to a first one of the components and a second data type to all remaining components subjected to saliency testing. The first data type is of reduced precision as compared to the second data type, and the component assigned to store values of the first data type is the component that is being "tested" when the language model 418 is executed within a test environment implementing the mixed-precision test configuration. Other test configurations employed in the same set of saliency testing operations respectively assign the first data type to different respective model components used in matrix multiplication operations so as to enable salience testing of different individual model components in isolation of one another.

During the saliency test operations, the language model 418 is loaded into memory of an accelerator emulator 414, which is a software-based system that mimics the behavior of the accelerator described by the AI hardware accelerator specification 412. During saliency test operations, the accelerator emulator 414 provides a test environment that is iteratively re-configured to execute the language model 104 according to each of the mixed-precision test configurations. Within each of the test configurations, saliency testing is conducted, and one or more saliency metrics are measured. In some implementations, a saliency metric is measured by quantifying a spatial shift in matrix vectors caused by a precision change in the values stored by those vectors.

In still other implementations, a saliency metric is measured by quantifying a reduction in model accuracy that occurs when data type precision is lowered for a particular model component without changing the data type stored by other model components. For example, the salience analyzer 406 measures an accuracy metric while the language model 418 is configured in a baseline configuration (e.g., a configuration recommended by a model provider that uses a uniform data type for all matrix multiplication operations) and then measures the same accuracy metric again while the language model 418 is configured in each different one of the mixed-precision test configurations. Within each different one of the test configurations, a different model component is selected to store values of a reduced-precision data type, while all other model components used in matrix multiplication operations store values of a uniform data type (e.g., the same data type used in the baseline configuration). The identity of the select model component storing the reduced-precision data type varies from one test configuration. Thus, by varying the identity of the select model component storing the reduced-precision data type across different test configurations, it is possible to determine the degree of influence that the precision of different model components has on model performance.

In implementations that rely on measurements of model accuracy to assess the saliency of individual components, saliency testing may entail passing a test dataset 420 to the salience analyzer 406. For example, the test dataset 420 includes a series of model inputs that request the model to perform specific tasks of one or more different types. For example, the test dataset may include a statistically significant number of Q&A tasks, coding tasks, and/or math tasks. The "correct outputs" of the requested tasks are also provided to the saliency analyzer 406. The test dataset 420 is iteratively processed by the language model 418 and on the accelerator emulator 412, while the accelerator emulator 412 is configured to emulate behavior of the AI accelerator when configured according to a select one of the test configurations. During each iteration of processing on the test dataset 420, the model outputs generated during the test iteration are compared to the known "correct outputs" to evaluate the accuracy of the language model 418 for the test configuration. The model accuracy determined for the mixed-precision test configuration is then compared to a similarly computed accuracy determined for the baseline configuration, and the two accuracies are compared to derive a saliency metric for the test configuration (e.g., the difference between model accuracy for the baseline configuration and the test configuration). The saliency metric for the test configuration is stored in association with an identifier for the select model component that is, in the test configuration, assigned to store the reduced-precision data type (e.g., since the observed deviation in accuracy between the test configuration and the baseline configuration is attributable to the variation in data type stored by this component). The saliency metric stored for a given model component represents the respective salience (precision sensitivity) of that component.

Notably, accuracy of the language model 418 may - for a given configuration - vary based on the different "type(s)" of processing tasks within the test dataset 410; therefore, some implementations provide for computing more than one saliency metric with respect to each test configuration and/or for combining saliency metrics that are computed based on different types of processing tasks included in the test dataset 420 to derive a final saliency metric for the individual model component that is tested within each test configuration.

Using the above-described saliency metrics determined for different model components, as described above, the salience analyzer 406 determines a saliency ranking 428. The saliency ranking 428 ranks the different model components based on their relative salience. In the example shown, the salience testing operations are performed at the individual decoder level - meaning, the test configurations each reduce the data type assigned to a different decoder as a whole. Here, the saliency metric determined for each model component is given in terms of a salience "score," with lower-number scores being indicative of more sensitivity to precision changes and higher-number scores being indicative of less sensitivity to precision changes. Here, D1 is determined to be the least salient component, followed (in order of decreasing salience) by D3, D4, Dn, and D2. This means that a reduction in the precision of the data type stored by D1 has a lesser impact on model accuracy than a reduction in the precision of the data type stored by D3, which has a lesser impact on model accuracy than a reduction in the precision of the datatype stored by D4, and so on.

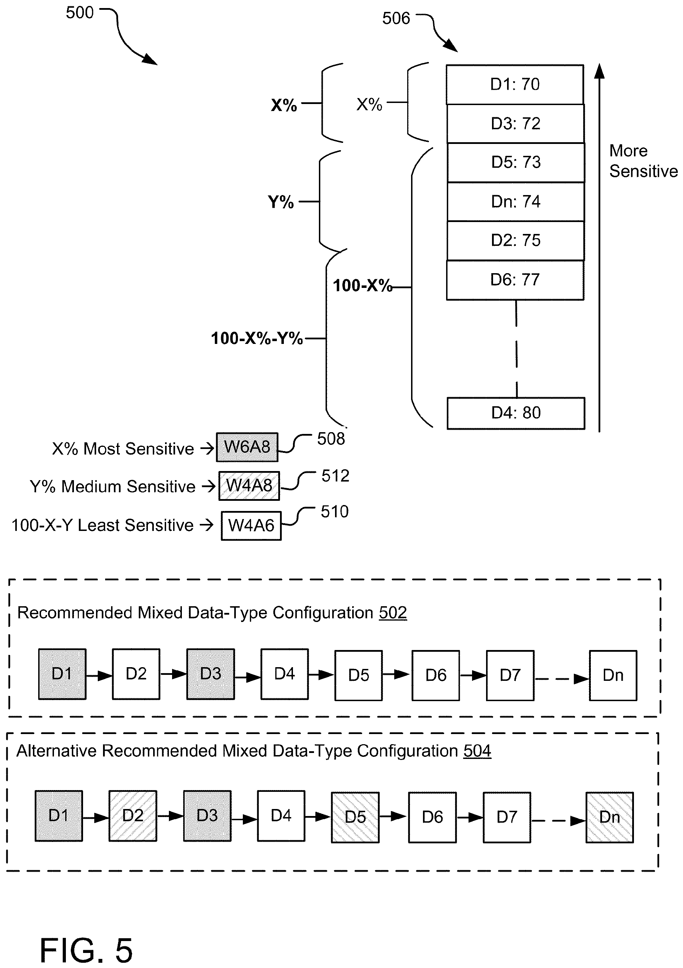

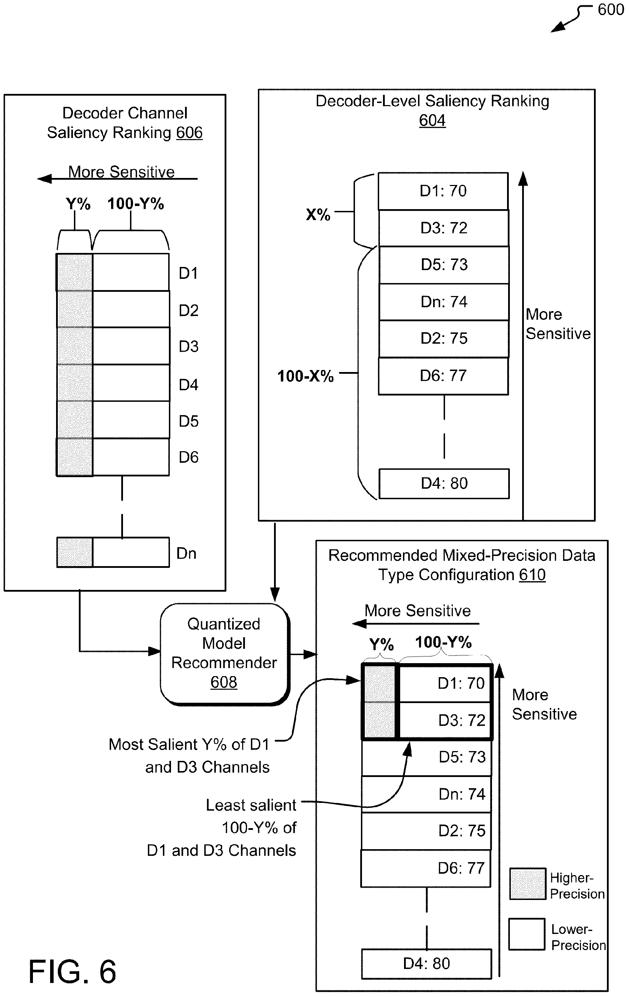

The saliency ranking 428 is input to the quantized model recommender 408, which, in turn, uses the saliency ranking 428 to generate and output a recommended mixed-precision data type configuration 430 for implementing the language model 418 on the AI hardware accelerator 414. The recommended mixed-precision data type configuration 430 assigns two data types among the different decoders - a first data type and a second data type that is of reduced precision as compared to the first data type. In this example, the two least salient decoders (D1 and D3) are assigned to store the second (reduced-precision) data type, while the remaining decoders are assigned to store the first (higher-precision) data type. An example methodology for using the saliency ranking 428 to generate the recommended mixed-precision data type configuration 430 is discussed in detail with respect to FIG. 5 and 6 below.

Following the above-described operations, the quantized model recommender 408 may, in some implementations, automatically ready the AI hardware accelerator (not shown) to execute the language model 418 by configuring the AI hardware accelerator in accordance with the recommended mixed-precision data type configuration 430 and loading the language model 418 into memory for final deployment in the identified optimal (recommended) configuration.

FIG. 5 illustrates example methodologies 500 for using a saliency ranking 506 to identify an optimal data type configuration for an AI hardware accelerator implementing a language model. In the example shown, saliency testing is performed at the decoder level, and the decoders are ranked in order of salience, yielding the saliency ranking 506. In one implementation, the saliency ranking 506 is generated by a salience analyzer, such as the salience analyzer 406 of FIG. 4.

The illustrated examples include two different recommended mixed-precision data type configurations 502 and 504 that are generated, in different implementations, based on the same saliency ranking 506. The recommended mixed-precision data type configuration 502 assigns two different data types among model components subjected to the saliency testing, while the recommended mixed-precision data type configuration 504 assigns three different data types among the model components subjected to the saliency testing. In implementations, the recommended mixed-precision data type configurations 502 and 504 are generated by a quantized model recommender, such as the quantized model recommender 408 of FIG. 4.

Per a first example methodology used to generate the recommended mixed-precision data type configuration 502, the saliency ranking 506 is analyzed to identify a most salient subset of the model components (e.g., a top X% of the most salient model components) and a least salient subset of the model components (e.g., a bottom 100-X% of the components in the ranking). The most salient subset of the model components is assigned to store a first data type, which is the highest-precision data type assigned in this example, referred to below as the "highest-precision data type 508." The least salient subset of the model components (e.g., the remaining 100-X% ) are assigned to store values of a second data type, referred to below as a "lowest-precision data type 510." Consistent with other relative terminology used herein, the lowest-precision data type 510 is a data type that has a reduced degree of precision as compared to the highest-precision data type 508. In the illustrated example, decoders D1 and D3 are determined to collectively comprise the most salient subset of the model components in the saliency ranking 506. Thus, in the recommended mixed-precision data type configuration 502, the decoders D1 and D3 are assigned to store the highest-precision data type 508 (e.g., W6A8) while the remaining decoders (e.g., the remaining 100-X%) are assigned to store the lowest-precision data type 510 (e.g., W4A6).

Per a second example methodology used to generate the recommended mixed-precision data type configuration 504, the saliency ranking 506 is analyzed to identify the most salient X% of the model components. Like the previous example, these components are assigned to store values of the highest-precision data type 508. However, in this second implementation, the *next-most* salient Y% of the model components (e.g., immediately following the top X% in the saliency ranking 506) are assigned to store a mid-precision data type 512 (e.g., W4A8), which is of higher precision than the lowest-precision data type 510 and lower precision than the highest-precision data type 508. In this example, the bottom 100-X%-Y% of components in the saliency ranking 506 are assigned to store values of the lowest-precision data type 510.

In the examples set forth above, the percentages X and Y may be selected hyperparameters in advance of deploying the system (e.g., the mixed-precision data type configuration assistant 102 of FIG. 1) that generates the recommended mixed-precision data type configurations 502 and 504. For example, the percentages X and Y are determined experimentally, such as by adjusting these values and observing the impact on performance, which may be done manually or through automated methods like grid search or random search.

FIG. 6 illustrates example operations 600 for ranking different language model components in terms of relative saliency and using the ranking to generate a recommended mixed-precision data type configuration 610. In this implementation, saliency testing is conducted via two different rounds of saliency testing operations. Each round of saliency testing is designed to evaluate the salience of a different subset of components within the language model.

During a first round of the saliency testing, a salience analyzer evaluates the salience of individual decoders within a language model. In one implementation, this entails configuring an accelerator emulator according to each one of a first plurality of mixed-precision test configurations. The first plurality of mixed-precision test configurations are each designed to test the salience of a different one of the decoders within the language model. For example, the test configurations in this first plurality assign two data types among the model's decoders - a first data type, referred to below as a "higher-precision data type," and a second data type that is of comparatively lower precision and, therefore referred to below as a "lower-precision data type." Each test configuration in the first plurality assigns the lower-precision data type to a select different one of the model decoders while assigning the higher-precision data type to all other model decoders.

During the first round of saliency testing, the accelerator emulator is iteratively re-configured to execute the language model according to each different test configuration of the first plurality of mixed-precision test configurations, and a saliency metric is measured while the language model is executed within a test environment that implements the data types assigned to the different model components by the different test configurations, such as according to the methods described herein with respect to FIG. 1 or FIG. 4. For example, the test environment is either an emulator that emulates behavior of the AI hardware accelerator or the AI hardware accelerator itself. The saliency metric measured for each test configuration is stored in association with an identifier for a select one of the decoders that is assigned by the test configuration to store the lower-precision data type. Based on repeated measurements of the saliency metric for the different test configurations of the first plurality, the salience analyzer ranks a first subset of model components - specifically, the decoders (e.g., D1-Dn) of the language model- based on their relative saliency (e.g., sensitivity to changes in data type precision). This yields a decoder-level saliency ranking 604.

Subsequent to completing the first round of saliency testing and generating the decoder-level saliency ranking 604, the salience analyzer conducts a second round of saliency testing. During this second round of saliency testing, the saliency analyzer determines the relative salience of the channels (e.g., matrix columns) within each individual decoder. This entails configuring the accelerator emulator according to a second plurality of mixed-precision test configurations that are designed to test the salience of individual decoder channels. In one implementation, the test configurations in this second plurality assign two the higher-precision data type and the lower-precision data type among the different channels of an individual decoder within the language model. For example, each one of these test configurations assigns the lower-precision data type to a select decoder channel while simultaneously assigning the higher-precision data type to all other decoder channels of the language model, with the identity of the select decoder channel varying within the different test configurations of the second plurality. For example, the second plurality of test configurations includes a first test configuration that assigns the lower-precision data type to Channel 1 of Decoder 1 and assigns the higher-precision data type to all other N channels (e.g., Channels 2-N of Decoder N, and Channels 1-N of all other decoders). In this same implementation, the second plurality of test configurations includes a second test configuration that assigns the lower-precision data type to Channel 2 of Decoder 1 and assigns the higher-precision data type to all other decoder channels (e.g., Channels 1 and 3-N of Decoder N, and Channels 1-N of all other decoders).

The accelerator emulator is iteratively re-configured to execute the language model in accordance with each test configuration of the second plurality of test configurations, and a saliency metric is measured for each of these test configurations. During this second round of saliency testing, the saliency metric measure for each test configuration is stored in association with the select decoder channel that is assigned by the test configuration to store the lower-precision data type. For example, a value for the saliency metric measured in the first test configuration is stored in association with Decoder 1: channel 1, while a value for the saliency metric measured in the second test configuration is stored in association with Decoder 1, channel 2, and so forth. Based on repeated measurements of the saliency metric for the different decoder channels, the salience analyzer ranks the individual channels within each individual decoder in terms of their relative salience. This yields a sub-decoder channel saliency ranking 606.

Following the first and second rounds of saliency testing operations, a quantized model recommender 608 determines the recommended mixed-precision data type configuration 610 based on an analysis of both the decoder-level saliency ranking 604 and the sub-decoder channel saliency ranking 606.

From the decoder-level saliency ranking 604, the salience analyzer identifies a subset of "most salient decoders" and a subset of "least salient decoders." For example, decoders within a top X% of the decoder-level saliency ranking are selected for inclusion in the subset of most salient decoders, while the remaining 100-X% of decoders in the decoder-level saliency ranking 604 are selected for inclusion in the subset of least salient decoders. In the example shown, decoders D1 and D3 collectively make up the subset of most salient decoders, while the remaining decoders (D5, Dn, D2, D6, and D4) collectively make up the subset of least salient decoders

In this example, decoders in the least salient subset of decoders (e.g., the 100-X% in the decoder-level saliency ranking 604) are assigned data types at the decoder level - meaning, each decoder is assigned to store values of a singular data type. More specifically, the individual decoders in the least salient subset of decoders are assigned to store values of the lower-precision data type. In contrast, decoders in the most salient subset of decoders (e.g., the top X% in the decoder-level saliency ranking 604) are assigned data types at a *sub-decoder* level. Specifically, the sub-decoder level is a channel-based assignment - meaning, data types are assigned to individual channels within each decoder, and a single decoder may, therefore, include channels that store values of different data types. This channel-specific data type assignment is based, in part, on the sub-decoder channel saliency ranking 606.

In one implementation, the salience analyzer uses the sub-decoder channel saliency ranking 606 to identify a most salient subset of the channels within each of the decoders (e.g., D1-Dn) and a least salient subset of the channels within each of the decoders. For example, a top Y% of the "most salient channels" for a first decoder is identified as the "most salient subset of channels," whereas the remaining 100-Y% of channels in the same decoder are identified as the "least salient subset of channels" for the first decoder. These channels are represented by grey shading within the sub-decoder channel saliency ranking 606. If, for example, there are nine decoder channels in each decoder, and Y is set to 0.33, the most salient subset of channels within each decoder comprises three channels (33% of 9 channels). For example, decoder one may have channels 1, 4, and 7 among the "most salient Y%," whereas decoder 2 has channels 2, 4, and 6 among the "most salient Y%."

As mentioned above, the illustrated methodology provides for assigning the lower-precision data type to the subset of least-sensitive decoders (e. D5, Dn, D2, and D6) while assigning a mix of data types among the channels of each individual decoder included in the subset of most salient decoders (e.g., D1 and D3). To select these mixed data types to assign among the different channels within each decoder in the subset of most salient decoders (e.g., D1 and D3), the salience analyzer cross-references the sub-decoder channel saliency ranking 606 and identifies the Y% of most salient channels for each of these most salient decoders (D1, D3). These identified "most salient channels" are assigned to store values of the higher-precision data type while the remaining, less salient channels in the same decoders (e.g., the 100-Y% of least salient channels in D1 and D3) are assigned to store values of the reduced-precision data type.

By mixing data types among individual channels of the most salient decoders in the language model, a computational savings is realized over the implementation discussed with respect to FIG. 5, which mixes data type precision across different decoders by not across channels within an individual decoder. Further, by ensuring that the most sensitive channels in the most sensitive decoders use the higher-precision data type, the additional computational savings is realized without reducing model accuracy in comparison to the implementation of FIG. 5.

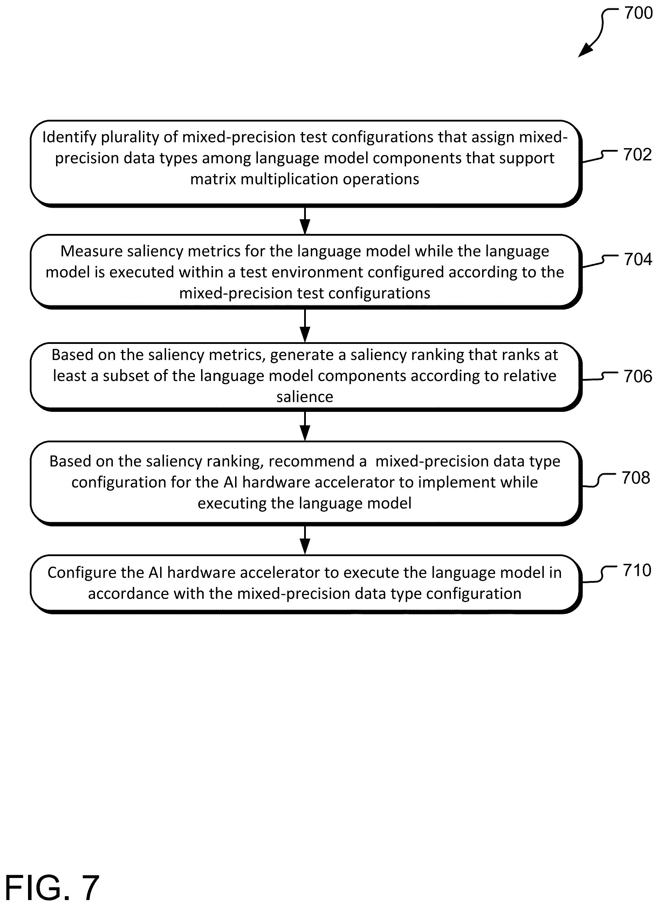

FIG. 7 illustrates example operations 700 for identifying a mixed-precision data type configuration usable to accelerate execution of a language model while retaining a target degree of accuracy for the language model. A test configuration selection operation 702 identifies a plurality of mixed-precision test configurations that assign mixed-precision data types among language model components that support matrix multiplication operations. Examples of language model components that support matric multiplication operations include decoders, sub-decoder compute blocks such as attention blocks and MLP blocks, and channels or rows within individual weight matrices.

A saliency testing operation 704 measures saliency metrics for the language model while the language model is executed by an accelerator emulator that is configured to emulate behavior of an AI hardware accelerator that performs computations of the language model in accord with data types set forth various test configurations selected from the plurality of mixed-precision test configurations. For example, the accelerator emulator is placed in a first one of the mixed-precision test configurations, and a saliency metric is measured. This is repeated for multiple (potentially all) of the different mixed-precision test configurations.

The saliency metrics quantify the degree by which different language model components (e.g., decoders and sub-decoder components) influence or contribute to the model's output- specifically, the degree by which model outputs change when precision is lowered for those respective components. Thus, a saliency metric measured for a select one of the mixed-precision test configurations may be stored as a measure of the saliency for the individual component that is "tested" by that test configuration (e.g., the component that is assigned by the test configuration, to store a lower-precision data type than other components within the same test configuration).

A ranking generation operation 706 generates a saliency ranking based on the saliency metrics measured during the saliency testing operation 704.

A data type configuration recommendation operation 708 recommends a mixed-precision data type configuration for the AI hardware accelerator to implement while executing the language model. The recommendation is based on the saliency ranking. In one implementation, data type configuration recommendation operation 708 identifies a most salient subset of the components (e.g., a top X% of components in the saliency ranking) and a least salient subset of the components (e.g., the bottom 100-X% of components in the saliency ranking). A higher-precision data type is then assigned to the most salient subset of the components, while a comparatively lower-precision data type is assigned to the least salient subset of the components. Other methodologies may also be employed, including methodologies that generate multiple saliency rankings (e.g., ranking decoders and then sub-decoder components within individual decoders, such as per the methodology discussed with respect to of FIG. 6) and methodologies that provide for assigned a mix of three or more data types among the model components (e.g., per the methodology discussed with respect to FIG. 5).

An optional configuration operation 710 configures the AI hardware accelerator to implement the mixed-precision data type configuration that was recommended in the previous operation, and the language model is then deployed for use (and execution on the AI hardware accelerator) by end users. In some implementations, the operations 700 terminate following the data type configuration recommendation operation 708.

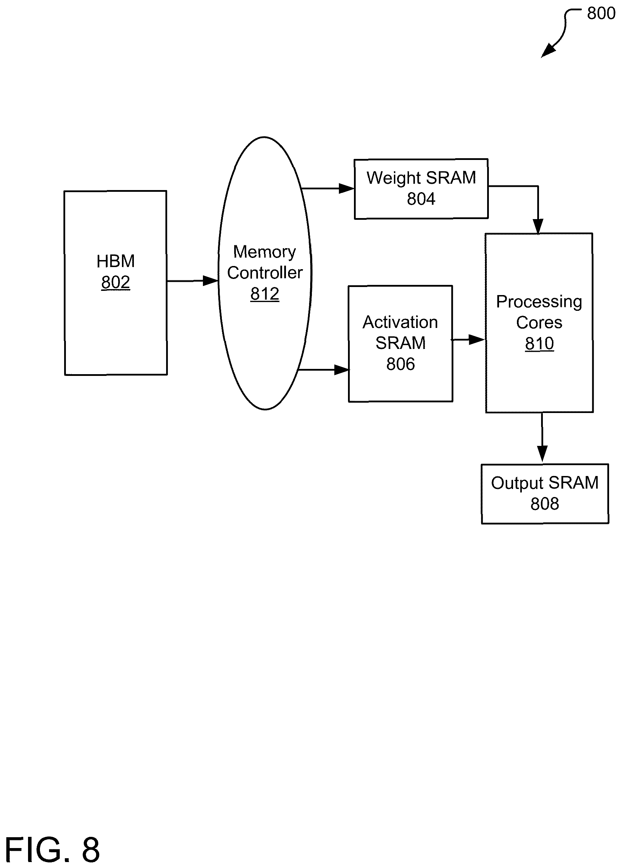

FIG. 8 illustrates an example AI hardware accelerator 800 that may be selectively configured to execute a language model in accordance with the herein-disclosed technology. The AI hardware accelerator 800 includes high-bandwidth memory (HBM 802), which uses high-speed memory technology to provide large memory capacity and fast data transfer rates. The HBM 802 serves as a main memory region for the storage of large datasets, such as input and output feature maps for deep learning workloads and/or neural network model weights and intermediate activations, particularly in implementations where on-chip static random access memory (SRAM, discussed below) is insufficient to store all of the neural network model weights and/or neural network activations of a language model. In some implementations, the AI hardware accelerator 800 uses external memory in lieu of the HBM 802.

In addition to the HBM 802, the AI hardware accelerator 800 includes multiple SRAM regions - which may comprise different physical memories or different dedicated regions of a same physical memory. These SRAM regions include a first memory region dedicated to storing model weights (e.g., weight SRAM 804), a second memory region dedicated to storing intermediate activation values (e.g., activation SRAM 806) for quick access during computations, and a third memory region dedicated to storing model outputs (e.g., output SRAM 808) that stores the final computed results of a language model before the results are sent to a next processing stage or external memory.

The AI hardware accelerator 800 further includes processing cores 810 that are tasked with performing tensor-based mathematical operations of the language model. One or more processing engine(s), such as a Tensor Core processing engine and/or a matrix multiplication (MatMul) processing engine, is loaded into a memory of the AI hardware accelerator 800 (e.g., the HBM 802 or dedicated SRAM region) and executed by the processing cores 810. The processing cores 810 may further include MAC (Multiply-Accumulate) units that perform high-speed mathematical operations in deep learning and digital signal processing - specifically, the matrix multiplication computations performed by language model components including decoders and sub-decoder components such as attention blocks, MLP blocks, decoder channels, and decoder rows. Different MAC units may dedicated to supporting computations of different sub-decoder components. A given MAC unit is, for example, dedicated to supporting a row-based matrix multiplication operation or a column-based matric multiplication operation for a specific compute block (e.g., an attention block or MLP block) within an individual decoder of the language model. The MAC units of the processing cores 810 may be capable of performing respective multiply-accumulate computations in a variety of different data types (e.g., FP4, FP6, FP8).

During a model configuration step, each subcomponent of the processing cores 810 (e.g., the processing engines(s) and MAC units of the processing cores 810) is configured to output values of a select data type assigned to a model component that it supports. Thus, configuring the AI hardware accelerator 800 to implement a recommended mixed-precision data type configuration may entail configuring the processing engine(s) and different MAC units of the processing cores 810 to store values of different data types that are identified within the mixed-precision data type configuration.

A memory controller 812 manages data flow between the processing cores 810 and on-chip memory (e.g., the HBM 802, weight SRAM 804, activation SRAM 806, and output SRAM 808), retrieving weights, activations, and output values for use in computations performed by the processing cores 810. This may entail retrieving weights and/or activations from the HBM 802, loading the weights and/or activations into respective dedicated regions of SRAM, passing the weights and activations, as needed, to the processing cores 810, and storing outputs generated by the processing cores in the output SRAM 808.

According to one implementation of the disclosed technology, the HBM 802 and/or dedicated on-chip SRAM regions are configured to store weights and/or activation of a language model as a plurality of mixed-precision data types (e.g., FP4, FP6, FP8). For example, weight SRAM 804 may be configured to receive and store weights of the language model in a plurality of data types. Likewise, SRAM activations 80 may be selectively configured to receive and store different activation values as different data types. Configuring the AI hardware accelerator 800 to implement a recommended mixed-precision data type configuration may, therefore, entail configuring various memory regions of the AI hardware accelerator 800 (e.g., dedicated address ranges within the HBM 802 or SRAM regions tasked with storing each decoder or sub-decoder component) to store data according to the data type(s) that match those set by corresponding subcomponents of the processing cores 810 that receive values from or pass outputs to those memory regions.

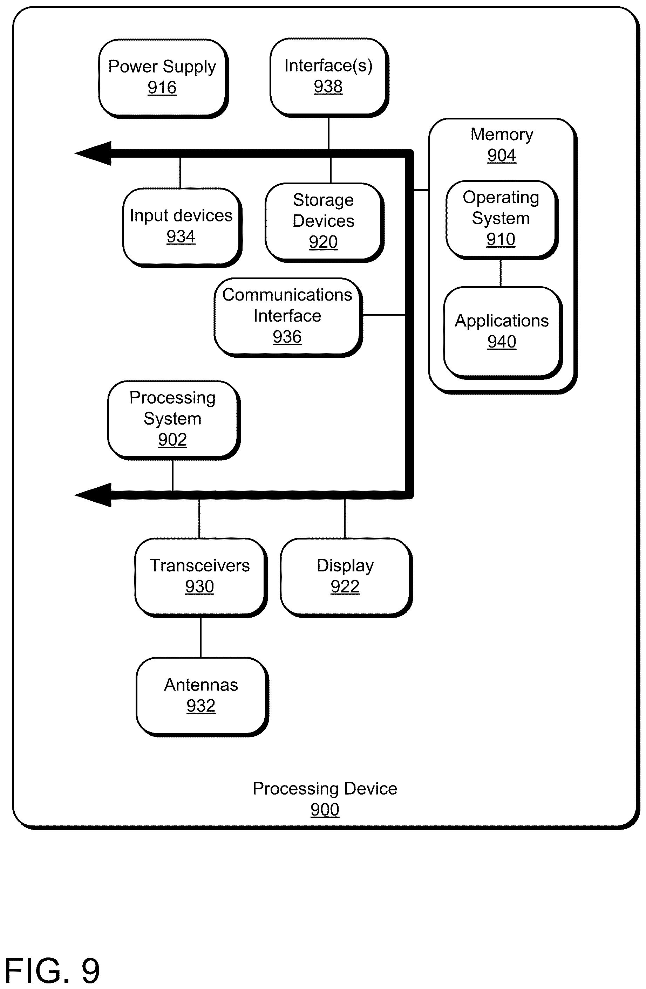

FIG. 9 illustrates an example computing device 900 for use in implementing the described technology. The computing device 900 may be a client computing device (such as a laptop computer, a desktop computer, or a tablet computer), a server/cloud computing device, an Internet-of-Things (IoT), any other type of computing device, or a combination of these options. The computing device 900 includes a processing system 902 and a memory 904. The memory 904 generally includes both volatile memory (e.g., RAM) and nonvolatile memory (e.g., flash memory), although one or the other type of memory may be omitted. An operating system 910 resides in the memory 904 and is executed by the processing system 902. In some implementations, the computing device 900 includes and/or is communicatively coupled to storage 920. When implementing aspects of the disclosed technology, the computing device 900 may be communicatively coupled to an AI hardware accelerator, such as the AI hardware accelerator shown in FIG. 8.

In the example computing device 970, as shown in FIG. 9, one or more software modules, segments, and/or processors, such as applications 750 (e.g., the mixed-precision data type configuration assistant 102 of FIG. 1 or FIG. 4), are loaded into the memory 904 by the operating system 910 and executed by the processor(s) 972. The storage 920 may store mixed-precision test configurations, saliency metrics, saliency rankings, and recommended mixed-precision data type configurations generated by the herein-disclosed technology.

The computing device 900 may include one or more communication transceivers 930, which may be connected to one or more antenna(s) 932 to provide network connectivity (e.g., mobile phone network, Wi-Fi^{®}, Bluetooth^{®}) to one or more other servers, client devices, IoT devices, and other computing and communications devices. The computing device 900 may further include a communications interface 936 (such as a network adapter or an I/O port, which are types of communication devices) that is used to establish connections over a wide-area network (WAN) or local-area network (LAN). It should be appreciated that the network connections shown are exemplary and that other communications devices and means for establishing a communications link between the computing device 900 and other devices may be used.

The computing device 900 may include one or more input devices 934 such that a user may enter commands and information (e.g., a keyboard, trackpad, or mouse). These and other input devices may be coupled to the server by one or more interfaces 938, such as a serial port interface, parallel port, or universal serial bus (USB). The computing device 900 may further include a display 922, such as a touchscreen display.

The computing device 900 may include a variety of tangible processor-readable storage media and intangible processor-readable communication signals. Tangible processor-readable storage can be embodied by any available media that can be accessed by the computing device 900 and can include both volatile and nonvolatile storage media and removable and non-removable storage media. Tangible processor-readable storage media excludes intangible, transitory communications signals (such as signals per se) and includes volatile and nonvolatile, removable, and non-removable storage media implemented in any method, process, or technology for storage of information such as processor-readable instructions, data structures, program modules, or other data. Tangible processor-readable storage media includes but is not limited to RAM, ROM, EEPROM, flash memory or other memory technology, CDROM, digital versatile disks (DVD) or other optical disk storage, magnetic cassettes, magnetic tape, magnetic disk storage, or other magnetic storage devices, or any other tangible medium which can be used to store the desired information and which can be accessed by the computing device 900. In contrast to tangible processor-readable storage media, intangible processor-readable communication signals may embody processor-readable instructions, data structures, program modules, or other data resident in a modulated data signal, such as a carrier wave or other signal transport mechanism. The term "modulated data signal" means a signal that has one or more of its characteristics set or changed in such a manner as to encode information in the signal. By way of example, and not limitation, intangible communication signals include signals traveling through wired media such as a wired network or direct-wired connection, and wireless media such as acoustic, RF, infrared, and other wireless media.

In some aspects, the techniques described herein relate to a system for configuring a hardware accelerator to execute a language model, the system including: a test configuration identifier stored in memory and executable by a processing system to identify a plurality of mixed-precision test configurations that assign mixed-precision data types among components of the language model, each configuration of the plurality of mixed-precision test configurations assigning a reduced-precision data type to a select one of the components while assigning a comparatively increased-precision data type to another one of the components; a salience analyzer stored in memory and executable by the processing system to: measure saliency metrics for the language model while the language model is executed according to different configurations selected from the plurality of mixed-precision test configurations; and based on the saliency metrics, generate a saliency ranking that ranks at least a subset of the components according to relative salience; a quantized model recommender stored in memory and executable by the processing system to: generate a recommended mixed-precision data type configuration for an artificial intelligence (AI) hardware accelerator to implement while executing the language model, the recommended mixed-precision data type configuration assigning the reduced-precision data type to a least salient subset of the components identified in the saliency ranking while assigning the comparatively increased-precision data type to a most salient subset of the components identified in the saliency ranking.

In some aspects, the techniques described herein relate to a system, wherein the salience analyzer measures the saliency metrics by operations including: measuring a saliency metric for an instance of the language model executed within a test environment while the test environment is configured according to a select test configuration of the plurality of mixed-precision test configurations; store the saliency metric in association with a select one of the components that is assigned by the select test configuration to store the reduced-precision data type; and based on repeated measurements of the saliency metric for different configurations of the plurality of mixed-precision test configurations, generate the saliency ranking.

In some aspects, the techniques described herein relate to a system, wherein the plurality of mixed-precision test configurations assign mixed-precision data types among model components used in matrix multiplication operations.

In some aspects, the techniques described herein relate to a system, wherein the test configuration identifier receives, as input, the language model and a specification for the AI hardware accelerator, the specification identifying data types supported by a dedicated processing engine of the AI hardware accelerator that supports matrix multiplication operations, and wherein the test configuration identifier identifies the plurality of mixed-precision test configurations based on the input.

In some aspects, the techniques described herein relate to a system, wherein measuring a first saliency metric of the saliency metrics includes: measuring a degree of noise introduced into the language model when the language model is executed in a test environment implementing a select configuration of the plurality of mixed-precision test configurations as compared to a baseline configuration that was used during training of the language model; or measuring a reduction in accuracy of the language model that results when the language model is configured according to the select configuration of the plurality of mixed-precision test configurations as compared to the baseline configuration that was used during training of the language model.

In some aspects, the techniques described herein relate to a system, wherein at least one of the plurality of mixed-precision test configurations assigns the reduced-precision data type to a first decoder of the language model while assigning the comparatively increased-precision data type to a second decoder of the language model.

In some aspects, the techniques described herein relate to a system, wherein at least one of the plurality of mixed-precision test configurations assigns the reduced-precision data type to a first sub-decoder component of a first decoder and assigns the comparatively increased-precision data type to a sub-decoder component of the first decoder.

In some aspects, the techniques described herein relate to a system, wherein the salience analyzer is further configured to: perform a first round of saliency testing that includes measuring a first saliency metric for a first subset of the plurality of mixed-precision test configurations, the first subset of the plurality of mixed-precision test configurations respectively assigning mixed-precision data types among decoders of the language model; based on values of the first saliency metric measured during the first round of saliency testing, identify a most salient subset of the decoders and a least salient subset of the decoders; perform a second round of saliency testing that includes measuring a second saliency metric for a second subset of the plurality of mixed-precision test configurations, the second subset of the plurality of mixed-precision test configurations respectively assigning the mixed-precision data types among sub-decoder components of the language model; and based on values of the second saliency metric measured during the second round of saliency testing, identify a most salient subset of the sub-decoder components within the most salient subset of the decoders and a least salient subset of the sub-decoder components within the most salient subset of the decoders, wherein the recommended mixed-precision data type configuration assigns the reduced-precision data type to the least salient subset of the sub-decoder components within the least salient subset of the decoders while assigning the comparatively increased-precision data type to the most salient subset of the sub-decoder components within the most salient subset of the decoders.

In some aspects, the techniques described herein relate to a system, wherein the quantized model recommender configures the AI hardware accelerator to execute the language model in accord with the recommended mixed-precision data type configuration

In some aspects, the techniques described herein relate to one or more tangible computer-readable storage media encoding processor-executable instructions for executing a computer process for configuring an artificial intelligence (AI) hardware accelerator to execute a language model, the computer process including: identifying a plurality of mixed-precision test configurations that assign mixed-precision data types among components of the language model used in matrix multiplication operations, the plurality of mixed-precision test configurations each assigning a reduced-precision data type to a select different one of the components while assigning a comparatively increased-precision data type to another one of the components; measuring saliency metrics for the language model while the language model is executed in a test environment in accordance with multiple of the plurality of mixed-precision test configurations; based on the saliency metrics, generating a saliency ranking that ranks at least a subset of the components according to relative salience; generating a recommended mixed-precision data type configuration for the AI hardware accelerator to implement while executing the language model, the recommended mixed-precision data type configuration assigning the reduced-precision data type to a least salient subset of the components identified in the saliency ranking and the comparatively increased-precision data type to a most salient subset of the components identified in the saliency ranking; and configuring the AI hardware accelerator to execute the language model in accord with the recommended mixed-precision data type configuration.

In some aspects, the techniques described herein relate to one or more tangible computer-readable storage media, wherein measuring the saliency metrics includes: measuring a saliency metric for an instance of the language model while the language model is executed within a test environment implementing a select test configuration of the plurality of mixed-precision test configurations; storing the saliency metric in association with a select one of the components that is assigned by the select test configuration to store the reduced-precision data type; and based on repeated measurements of the saliency metric for different configurations of the plurality of mixed-precision test configurations, generating the saliency ranking.

In some aspects, the techniques described herein relate to one or more tangible computer-readable storage media, wherein identifying the plurality of mixed-precision test configurations includes: receiving, as input, the language model and a specification for the AI hardware accelerator, the specification identifying data types supported by a dedicated processing engine of the AI hardware accelerator that supports matrix multiplication operations; and identifying the plurality of mixed-precision test configurations based on the input.

In some aspects, the techniques described herein relate to one or more tangible computer-readable storage media, wherein measuring the saliency metric includes: measuring a degree of noise introduced into the language model when the language model is implemented within a test environment implementing a select configuration of the plurality of mixed-precision test configurations as compared to a baseline configuration that was used during training of the language model; or measuring a reduction in accuracy of the language model that results when the language model is configured according to the select configuration of the plurality of mixed-precision test configurations as compared to the baseline configuration that was used during training of the language model.

In some aspects, the techniques described herein relate to one or more tangible computer-readable storage media, wherein at least one of the plurality of mixed-precision test configurations assigns the reduced-precision data type to a first decoder of the language model while assigning the comparatively increased-precision data type to a second decoder of the language model.

In some aspects, the techniques described herein relate to one or more tangible computer-readable storage media, wherein at least one of the plurality of mixed-precision test configurations assigns the reduced-precision data type to a first sub-decoder component of a first decoder and assigns the comparatively increased-precision data type to a sub-decoder component of the first decoder.

In some aspects, the techniques described herein relate to one or more tangible computer-readable storage media, wherein measuring the saliency metric includes: performing a first round of saliency testing that includes measuring a first saliency metric for a first subset of the plurality of mixed-precision test configurations, the first subset of the plurality of mixed-precision test configurations respectively assigning mixed-precision data types among decoders of the language model; based on values of the first saliency metric measured during the first round of saliency testing, identifying a most salient subset of the decoders and a least salient subset of the decoders; performing a second round of saliency testing that includes measuring a second saliency metric for a second subset of the plurality of mixed-precision test configurations, the second subset of the plurality of mixed-precision test configurations respectively assigning the mixed-precision data types among sub-decoder components of the language model; and based on values of the second saliency metric measured during the second round of saliency testing, identifying a most salient subset of the sub-decoder components within the most salient subset of the decoders and a least salient subset of the sub-decoder components within the most salient subset of the decoders, and wherein the recommended mixed-precision data type configuration assigns the reduced-precision data type to the least salient subset of the sub-decoder components within the least salient subset of the decoders while assigning the comparatively increased-precision data type to the most salient subset of the sub-decoder components within the most salient subset of the decoders.

In some aspects, the techniques described herein relate to a method comprising: identifying a plurality of mixed-precision test configurations that assign mixed-precision data types among language model components used in matrix multiplication operations of a language model, the plurality of mixed-precision test configurations each assigning a reduced-precision data type to a select different one of the language model components while assigning one or more comparatively increased-precision data types to other of the language model components; measuring a saliency metric for the language model while the language model is executed within a test environment implementing a select test configuration of the plurality of mixed-precision test configurations; storing the saliency metric in association with a select one of the language model components that is assigned by the select test configuration to store the reduced-precision data type; and based on repeated measurements of the saliency metric for different configurations of the plurality of mixed-precision test configurations, generating a saliency ranking that ranks at least a subset of the language model components according to relative salience; based on the saliency ranking, identifying a most salient subset of the language model components and a least salient subset of the language model components; generating a recommended mixed-precision data type configuration for execution of the language model by the AI hardware accelerator, the recommended mixed-precision data type configuration assigning the reduced-precision data type to the least salient subset of the language model components and the one or more comparatively increased-precision data types to the most salient subset of the language model components; and configuring the AI hardware accelerator to execute the language model in accord with the recommended mixed-precision data type configuration.

In some aspects, the techniques described herein relate to a method, wherein measuring the saliency metric includes: measuring a degree of noise introduced into the language model when the language model is executed within the test environment configured according to a select configuration of the plurality of mixed-precision test configurations as compared to a baseline configuration that was used during training of the language model; or measuring a reduction in accuracy of the language model that results when the language model is configured according to the select configuration of the plurality of mixed-precision test configurations as compared to the baseline configuration that was used during training of the language model.

In some aspects, the techniques described herein relate to a method, wherein at least one of the plurality of mixed-precision test configurations assigns the reduced-precision data type to a first decoder of the language model while assigning the one or more comparatively increased-precision data types to other decoders of the language model.

In some aspects, the techniques described herein relate to a method, wherein at least one of the plurality of mixed-precision test configurations assigns the reduced-precision data type to a first sub-decoder component of a first decoder and assigns the one or more comparatively increased-precision data types to other sub-decoder components of the first decoder.

In some aspects, the techniques described herein relate to a method for recommending a mixed-precision data type configuration to accelerate execution of a language model includes identifying a plurality of mixed-precision test configurations that assign mixed-precision data types among components of the language model; measuring saliency metrics for the language model while the language model is executed in a test environment configured in accord with multiple of the plurality of mixed-precision test configurations; generating a saliency ranking that ranks the components based on the saliency metrics; and generating the recommended mixed-precision data type configuration. The recommended mixed-precision data type configuration assigns a first, reduced-precision data type to a least salient subset of the components identified in the saliency ranking while assigning a second, higher-precision data type to a most salient subset of the components identified in the saliency ranking.

The logical operations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order unless explicitly claimed otherwise or a specific order is inherently necessitated by the claim language. The above specification, examples, and data, together with the attached appendices, provide a complete description of the structure and use of example implementations.

## Claims

1. A system (100, 400) for configuring a hardware accelerator to execute a language model (104, 418) (302), the system comprising:
a test configuration identifier (404) stored in memory (904) and executable by a processing system (100, 400, 902) to identify a plurality of mixed-precision test configurations that assign mixed-precision data types among components of the language model, each configuration of the plurality of mixed-precision test configurations assigning a reduced-precision data type to a select one of the components while assigning a comparatively increased-precision data type to another one of the components;
a salience analyzer (406) stored in memory and executable by the processing system to:
measure saliency metrics for the language model while the language model is executed according to different configurations selected from the plurality of mixed-precision test configurations; and
based on the saliency metrics, generate a saliency ranking (428, 506) that ranks at least a subset of the components according to relative salience;
a quantized model recommender (408, 608) stored in memory and executable by the processing system to:
generate a recommended mixed-precision data type configuration (110, 430, 502; 504, 610) for an artificial intelligence 'AI' hardware accelerator to implement while executing the language model, the recommended mixed-precision data type configuration assigning the reduced-precision data type to a least salient subset of the components identified in the saliency ranking while assigning the comparatively increased-precision data type to a most salient subset of the components identified in the saliency ranking.

2. The system of claim 1, wherein the salience analyzer measures the saliency metrics by operations comprising:
measuring a saliency metric for an instance of the language model executed within a test environment while the test environment is configured according to a select test configuration of the plurality of mixed-precision test configurations;
store the saliency metric in association with a select one of the components that is assigned by the select test configuration to store the reduced-precision data type; and
based on repeated measurements of the saliency metric for different configurations of the plurality of mixed-precision test configurations, generate the saliency ranking.

3. The system of claim 1 or claim 2, wherein the plurality of mixed-precision test configurations assign mixed-precision data types among model components used in matrix multiplication operations.

4. The system of any one of preceding claims, wherein the test configuration identifier receives, as input, the language model and a specification for the AI hardware accelerator, the specification identifying data types supported by a dedicated processing engine of the AI hardware accelerator that supports matrix multiplication operations, and wherein the test configuration identifier identifies the plurality of mixed-precision test configurations based on the input.

5. The system of any one of preceding claims, wherein measuring a first saliency metric of the saliency metrics includes:
measuring a degree of noise introduced into the language model when the language model is executed in a test environment implementing a select configuration of the plurality of mixed-precision test configurations as compared to a baseline configuration that was used during training of the language model; or
measuring a reduction in accuracy of the language model that results when the language model is configured according to the select configuration of the plurality of mixed-precision test configurations as compared to the baseline configuration that was used during training of the language model.

6. The system of any one of preceding claims, wherein at least one of the plurality of mixed-precision test configurations assigns the reduced-precision data type to a first decoder of the language model while assigning the comparatively increased-precision data type to a second decoder of the language model.

7. The system of claims 1 to 5, wherein at least one of the plurality of mixed-precision test configurations assigns the reduced-precision data type to a first sub-decoder component of a first decoder and assigns the comparatively increased-precision data type to a sub-decoder component of the first decoder.

8. The system of any one of preceding claims, wherein the salience analyzer is further configured to:
perform a first round of saliency testing that includes measuring a first saliency metric for a first subset of the plurality of mixed-precision test configurations, the first subset of the plurality of mixed-precision test configurations respectively assigning mixed-precision data types among decoders of the language model;
based on values of the first saliency metric measured during the first round of saliency testing, identify a most salient subset of the decoders and a least salient subset of the decoders;
perform a second round of saliency testing that includes measuring a second saliency metric for a second subset of the plurality of mixed-precision test configurations, the second subset of the plurality of mixed-precision test configurations respectively assigning the mixed-precision data types among sub-decoder components of the language model; and
based on values of the second saliency metric measured during the second round of saliency testing, identify a most salient subset of the sub-decoder components within the most salient subset of the decoders and a least salient subset of the sub-decoder components within the most salient subset of the decoders,
wherein the recommended mixed-precision data type configuration assigns the reduced-precision data type to the least salient subset of the sub-decoder components within the least salient subset of the decoders while assigning the comparatively increased-precision data type to the most salient subset of the sub-decoder components within the most salient subset of the decoders.

9. The system of any one of preceding claims, wherein the quantized model recommender configures the AI hardware accelerator to execute the language model in accord with the recommended mixed-precision data type configuration.

10. One or more tangible computer-readable storage (920) media encoding processor-executable instructions for executing a computer process for configuring an artificial intelligence 'AI' hardware accelerator (106, 800) to execute a language model (104, 302, 418), the computer process comprising:
identifying a plurality of mixed-precision test configurations that assign mixed-precision data types among components of the language model used in matrix multiplication operations, the plurality of mixed-precision test configurations each assigning a reduced-precision data type to a select different one of the components while assigning a comparatively increased-precision data type to another one of the components;
measuring saliency metrics for the language model while the language model is executed in a test environment in accordance with multiple of the plurality of mixed-precision test configurations;
based on the saliency metrics, generating a saliency ranking (428, 506) that ranks at least a subset of the components according to relative salience;
generating a recommended mixed-precision data type configuration (110, 430, 502; 504, 610) for the AI hardware accelerator to implement while executing the language model, the recommended mixed-precision data type configuration assigning the reduced-precision data type to a least salient subset of the components identified in the saliency ranking and the comparatively increased-precision data type to a most salient subset of the components identified in the saliency ranking; and
configuring the AI hardware accelerator to execute the language model in accord with the recommended mixed-precision data type configuration.

11. The one or more tangible computer-readable storage media of claim 10, wherein measuring the saliency metrics includes:
measuring a saliency metric for an instance of the language model while the language model is executed within a test environment implementing a select test configuration of the plurality of mixed-precision test configurations;
storing the saliency metric in association with a select one of the components that is assigned by the select test configuration to store the reduced-precision data type; and
based on repeated measurements of the saliency metric for different configurations of the plurality of mixed-precision test configurations, generating the saliency ranking.

12. The one or more tangible computer-readable storage media of claim 10 or claim 11, wherein identifying the plurality of mixed-precision test configurations comprises:
receiving, as input, the language model and a specification for the AI hardware accelerator, the specification identifying data types supported by a dedicated processing engine of the AI hardware accelerator that supports matrix multiplication operations; and
identifying the plurality of mixed-precision test configurations based on the input.

13. The one or more tangible computer-readable storage media of claims 10 to 12, wherein measuring the saliency metric includes:
measuring a degree of noise introduced into the language model when the language model is implemented within a test environment implementing a select configuration of the plurality of mixed-precision test configurations as compared to a baseline configuration that was used during training of the language model; or
measuring a reduction in accuracy of the language model that results when the language model is configured according to the select configuration of the plurality of mixed-precision test configurations as compared to the baseline configuration that was used during training of the language model.

14. The one or more tangible computer-readable storage media of claims 10 to 13, wherein at least one of the plurality of mixed-precision test configurations assigns the reduced-precision data type to:
a first decoder of the language model while assigning the comparatively increased-precision data type to a second decoder of the language model, or
a first sub-decoder component of a first decoder and assigns the comparatively increased-precision data type to a sub-decoder component of the first decoder.

15. A method comprising:
identifying (702) a plurality of mixed-precision test configurations that assign mixed-precision data types among language model components used in matrix multiplication operations of a language model, the plurality of mixed-precision test configurations each assigning a reduced-precision data type to a select different one of the language model components while assigning one or more comparatively increased-precision data types to other of the language model components;
measuring (704) a saliency metric for the language model while the language model is executed within a test environment implementing a select test configuration of the plurality of mixed-precision test configurations;
storing the saliency metric in association with a select one of the language model components that is assigned by the select test configuration to store the reduced-precision data type; and
based on repeated measurements of the saliency metric for different configurations of the plurality of mixed-precision test configurations, generating a saliency ranking (706) that ranks at least a subset of the language model components according to relative salience;
based on the saliency ranking, identifying a most salient subset of the language model components and a least salient subset of the language model components;
generating (708) a recommended mixed-precision data type configuration for execution of the language model by the AI hardware accelerator, the recommended mixed-precision data type configuration assigning the reduced-precision data type to the least salient subset of the language model components and the one or more comparatively increased-precision data types to the most salient subset of the language model components; and
configuring (710) the AI hardware accelerator to execute the language model in accord with the recommended mixed-precision data type configuration.
